# EUROPÄISCHE PATENTSCHRIFT

(11) **EP 2 489 455 B1**
(45) Veröffentlichungstag und Bekanntmachung des Hinweises auf die Patenterteilung: **13.09.2017**
(21) Anmeldenummer: 11466036.8
(22) Anmeldetag: 10.11.2011
(51) Int. Cl.: B23D 77/00, B23B 31/00, B23B 31/30

(54) **Werkzeug mit zentralgekühltem Schneideteil zum Aufreiben von Löchern**
Tool with centrally cooled cutting section for reaming holes
Outil doté d'une partie tranchante à refroidissement centralisé pour l'alésage de trous

(30) Priorität: 15.02.2011 CZ 201123933 U
(43) Veröffentlichungstag der Anmeldung: 22.08.2012
(73) Patentinhaber: FINAL Tools a.s., 627 00 Brno (CZ)
(72) Erfinder: Fiala, Stanislav, 628 00 Brno (CZ); Kouril, Karel, 628 00 Brno (CZ)
(74) Vertreter: Malusek, Jiri

(56) Entgegenhaltungen:
- EP-A1- 0 579 371
- EP-A1- 0 776 727
- EP-A1- 0 781 616
- DE-A1- 19 522 141
- DE-A1- 19 754 518
- DE-A1-102005 024 823

## Beschreibung

### Technischer Bereich

Die vorliegende Erfindung betrifft ein Werkzeug zum maschinellen Ausreiben von Löchern, insbesondere denen mit kleinen Durchmessern, auf Werkzeugmaschinen mit eingebauter Kühlflüssigkeitszuführung.

### Bestehender Stand der Technik

Bei zahlreichen Anwendungen, die das Zurichten von massgenauen Löchern umfassen, insbesondere beim Ausreiben von weicheren oder zähharten Stählen, ist es sehr vorteilhaft, wenn solche Reibahlen verwendet werden, deren Scheide aus Cermet hergestellt ist. Bei derartigen modernen Werkzeugen lassen sich deutlich höhere Schneidgeschwindigkeiten im Vergleich zu den aus herkömmlichem Sinterhartmetall hergestellten Werkzeugen einstellen, wobei auch längere Standzeiten der Schneidkanten erreichbar sind. Wenn jedoch derartige Werkzeuge zum Ausreiben von Löchern mit kleinen Durchmessern verwendet werden, treten spezifische Probleme auf, die mit erheblichen Ansprüchen auf die technische Lösung und Ausführung dieser Werkzeuge verbunden sind. Im Allgemeinen ist diese Tatsache hauptsächlich von der niedrigen Biege- und Torsionsfestigkeit des ausgelegten Abschnitts der Reibahlen mit kleinen Durchmessern sowie von den sich daraus ergebenden räumlichen Problemen mit der Sicherstellung einer ausreichenden Zuführung des Kühlschmiermittels zu den Schneidkanten bedingt. Dieses Problem stellt sich umso schwerwiegender dar, dass bei der Hochleisturigsbearbeitung eine grössere Wärmemengen freigesetzt werden und die Cermet-Werkstoffe demgegenüber eine niedrige Wärmeleitfähigkeit aufweisen. Die nichtausreichende Intensität der Kühlung führt dann zur vorzeitigen Abnutzung des Werkzeugs oder zur Notwendigkeit, die Schneidgeschwindigkeiten, Vorschübe und Reibzugaben zu verringern.

*In* DE 10 2005 024 823 A1 *ist für* das Ausreiben der Löcher mit kleinen Durchmessern ein drehbares Schaftwerkzeug mit einer zentralgekühlten Cermet-Schneide und mit mindestens einem sich in der Längsrichtung erstreckenden Hauptkanal für die Zuführung der Kühlflüssigkeit vorgestellt, wobei mit dem Schaft des Werkzeugs der Schneidkopf desselben verbunden ist, der mit den die Auslaufabschnitte aufweisenden Ableitungsnuten versehen ist, wobei zwischen den Auslaufabschnitten und dem Schaft die Hülse angeordnet ist, die mindestens teilweise den zwischen dem Hauptkanal und den Auslaufabschnitten ausgebildeten Zuleitungskanals überlagert, wenn mindestens ein solcher Zuleitungskanal im Wesentlichen koaxial mit der Längsachse des Schaftes sowie des Schneidkopfs angeordnet ist und zwischen dem Hauptkanal und dem Zuleitungskanal bzw. zwischen dem Zuleitungskanal und den Auslaufabschnitten schlichte Übergänge vorgesehen sind.

EP 0 776 727 A1 *stellt ein rotiererendes Schaftwerkzeug gemäß dem Oberbegriff des Anspruchs 1 mit zentralgekühltem Schneideteil zum Aufreiben von Löchern, gebildet von einem Schneidwerkzeug, das aus einer Schneide, einem Schaft und einem Einspannzapfen besteht, von einem zylindrischen, radial schrumpfbaren Spannfutter und von einem Abdeckfutter zur Vermeidung der Leckagen der Kühlflüssigkeit, wobei für die Durchströmung der Kühlflüssigkeit die in eine ringförmige Spalte einmündenden, leckagenfrei gestalteten Hohlräume vorgesehen sind, dar. Schneidwerkzeug kann von dem Spannfutter getrennt sein.*

Zu den wichtigsten Nachteilen der vorgenannten Lösung gehört vor allem de hohe Arbeitaufwand bei der Herstellung eines unlösbar zusammengebauten Werkzeugs, der nach der Abnutzung der funktionellen Schneide nicht wiederverwendbar ist. Die sehr hohe Herstellungsgenauigkeit dieser Bauart widerspiegelt sich nachteilig in dem Preis des Werkzeugs beziehungsweise in den hohen Kosten beim Ausreiben.

Der erfindungsgemässen Erfindung liegt die Aufgabe zugrunde, ein einfach zusammenstellbaren Ausreibwerkzeug vorzustellen, der den mühelosen Wechsel des eigentlichen Schneidwerkzeugs in einer einfach zerlegbaren Werkzeugaufnahme realisierbar macht, welche das sehr genaue mittige Einspannen in den Spindeln der Werkzeugmaschinen mittels eines hydraulisch betätigten Spannzeugs ermöglicht, durch welche die Kühlflüssigkeit leckagenfrei zugeführt wird und welche nach dem Werkzeugwechsel wiederverwendbar ist.

### Gegenatand der Erfindung

Die oben angeführten Nachteile werden durch ein Werkzeug mit den Merkmalen des Anspruchs 1 beseitigt. Ein Werkzueg mit den Merkmalen des Oberbegriffs des Anspruchs 1 ist dadurch gekennzeichnet, *dass die im zylindrischen, radial schrumpfbaren Spannfutter vorgesehenen Hohlräume als mindestens drei durchlaufende geschlossene, Nuten ausgebildet sind und die Länge derselben grösser ist als die Länge der sich zwischen dem Einspapnabschnitt des Scheidwerkzeugs und dem die Hohlräume enthaltenden zylindrischen, radial schrumpfbaren Spannfutter erstreckenden Kontaktfläche.*

Das Ausreibwerkzeug setzt sich aus mehreren frei zerlegbaren Einzelteilen zusammen, die einfach auswechselbar sind, wobei die sehr genaue mittige Einspannung der Schneide des Werkzeugs gegenüber der Drehachse der Spindel der Werkzeugmaschine erreichbar ist und zugleich die leckagenfreie Zuführung der unter Druck stehenden Kühlflüssigkeit durch die einfach ausgebildeten Hohlräume des Werkzeugs bis in die Schneidnuten desselben gewährleistet ist.

In einer vorteilhaften Ausführungsform ist das Schneidwerkzeug mit der Schneide, dem Schaft und dem Einspannzapfen als ein Monoblock-Werkzeug aus Cermet ausgebildet.

In einer anderen vorteilhaften Ausführungsform ist das Schneidwerkzeug mit der Schneide, dem Schaft und dem Einspannzapfen als ein Monoblock-Werkzeug aus gesintertem Hartmetall ausgebildet.

In einer weiteren vorteilhaften Ausführungsform ist das Schneidwerkzeug mit der Schneide, dem Schaft und dem Einspannzapfen als ein Monoblock-Werkzeug aus zwei unterschiedlichen Werkstoffen ausgebildet.

In einer weiteren vorteilhaften Ausführungsform ist die Schneide des Schneidwerkzeugs mit einem abreibfesten Überzug versehen.

In einer anderen vorteilhaften Ausführungsform ist das zylindrische, radial schrumpfbare Spannfutter aus Edelstahl hergestellt.

### Übersicht der Abbildungen in den Zeichnungen

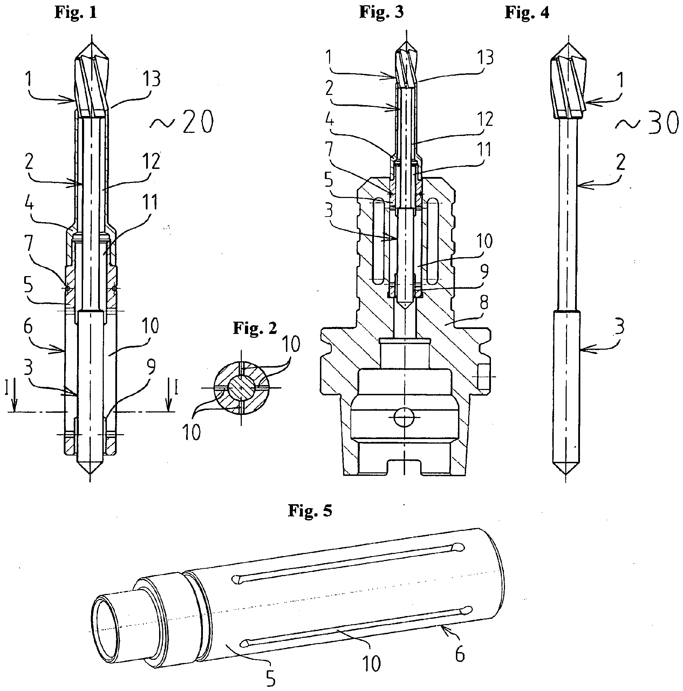

Die Erfindung wird nachfolgend anhand der Zeichnungen näher erläutert, die die folgenden Abbildungen enthalten. Fig. 1 zeigt das Ausreibwerkzeug nach der Erfindung im Längsschnitt, Fig. 2 zeigt den entlang der Linie I-I geführten Querschnitt des in Fig. 1 dargestellten radial schrumpfbaren Spannfutters, Fig. 3 zeigt das Ausreibwerkzeug nach Fig. 1 in dem mittels eines hydraulisch betätigten Spannzeugs erreichten eingespannten Zustand, Fig. 4 zeigt das eigentliche Schneidwerkzeug und Fig. 5 zeigt das radial schrumpfbare Spannfutter nach Fig. 1 im Detailansicht.

### Beispielhafte Ausführung der Erfindung

Die Fig. 1 zeigt das Ausreibwerkzeug 20 im zusammengestellten Zustand vor der Einspannung in das hydraulisch betätigte Spannzeug 8, wobei das Ausreibwerkzeug 20 frei zusammenstellbar sowie frei wieder zerlegbar ist. Der grundlegende Teil des Ausreibwerkzeugs 20 ist das eigentliche Schneidwerkzeug 30, das aus der Schneide 1, dem Schaft 2 und dem Einspannzapfen 3 besteht und in der Fig. 4 dargestellt ist. Um den Schaft 2 herum ist das Abdeckfutter 4 angeordnet, das mit seinem oberen Ende spielfrei an das untere Bereich des radial schrumpfbaren Futters 5 angeschlossen und mit seinem unteren Ende von oben her an der Schneide 1 angebracht ist. Das Abdeckfutter 4 verhindert die Leckagen der Kühlflüssigkeit und zugleich führt diese direkt den Schneidnuten der Schneide 1 des Schneidwerkzeugs 30 zu. Im unteren Bereich des zylindrischen, radial schrumpfbaren Futters 5 ist eine Rundnut vorgesehen, in der die Dichtung 7 zum Abdichten des Raums zwischen der inneren Fläche des Hohlraums des hydraulischen Spannzeugs 8 und der äusseren Fläche des schrumpfbaren Futters 5 gelagert ist. Dies ist klar in der Fig. 3 ersichtlich, wo das Werkzeug bereits im dem hydraulischen Spannzeug 8 eingespannt ist. Vor dem hydraulischen Spannzeug liegt ein nicht dargestellter Hohlraum der Spindel der Werkzeugmaschine, in dem sich das entsprechende Spannvorrichtung befindet.

Wie bereits oben erwähnt, ist das Futter 5 als radial schrumpfbar ausgeführt. Aus dem in der Fig. 5 gezeigten Detailansicht ist ersichtlich, dass in dem Futter 5 mindestens drei durchlaufende Nuten ausgebildet sind, deren Länge grösser ist als die Länge der sich zwischen dem Einspannzapfen 3 des Schneidwerkzeugs 30 und dem radial schrumpfbaren Futter 5 erstreckende Kontaktfläche 6, wobei diese Nuten nach dem Einspannen des Werkzeugs im hydraulischen Spannzeug 8 die längsverlaufenden Hohlräume 10 bilden. Diese Hohlräume 10 dann einerseits die radiale Schrumpfbarkeit ermöglichen und andererseits als Verbindungskanäle dienen, die für die Zuführung der Flüssigkeit aus dem oberen Hohlraum 9, der mit der Flüssigkeit von der in dem hydraulischen Spannzeug 8 angeordneten Zuleitung eingespeist wird, dem mittleren Hohlraum 11 dienen. Aus dem letztgenannten Hohlraum strömt dann die Flüssigkeit durch den im Abdeckfutter 4 ausgebildeten unteren Hohlraum 12 direkt in die Schneidnuten der Schneide 1 des Schneidwerkzeugs 30.

Aus der in der Fig. 2 als Querschnitt I-I gezeigten Detailansicht ist ersichtlich, dass in der beschriebenen beispielhaften Ausführungsform vier Hohlräume 10 vorgesehen sind und dass diese kreuzweise angeordnet sind. Einem Fachmann liegt jedoch nahe, dass auch eine andere Anzahl von Hohlräumen sowie eine entsprechende Anordnung derselben realisierbar wäre.

Das aus mehreren Einzelteilen frei zusammengestellte Ausreibwerkzeug 20, das mit der zylinderförmigen Spannfläche versehen ist, ist für das sehr genaue mittige Einspannen in den Spindeln der Werkzeugmaschinen mittels des hydraulisch betätigten Spannzeugs 8 bestimmt, wobei die Kühlflüssigkeit leckagenfrei von den innen ausgebildeten Hohlräumen 9, 10, 11, 12 geführt wird, um durch die ringförmige Spalte 13 in die Schneidnuten der Schneide 1 des Schneidwerkzeugs 30 einzumünden.

Aus der vorgenannten Erfindung ergibt sich, dass das Ausreibwerkzeug 20 vorteilhaft und kostengünstig renovierbar ist, und zwar durch den blossen Wechsel des eigentlichen Schneidwerkzeugs 30. Das radial schrumpfbare Futter 5 sowie das Abdeckfutter 4 zur Vermeidung der unerwünschten Leckagen der Kühlflüssigkeit bleiben dabei vielfach wiederverwendbar.

Ein weiterer Vorteil besteht darin, dass das eigentliche Schneidwerkzeug 30 sich sehr effizient nachschleifen und beschichten lässt.

## Patentansprüche

1. Werkzeug mit zentralgekühltem Schneideteil zum Aufreiben von Löchern, gebildet von einem Schneidwerkzeug (30), das aus einer Schneide (1), einem Schaft (2) und einem Einspannzapfen (3) besteht, von einem zylindrischen, radial schrumpfbaren Spannfutter (5) und von einem Abdeckfutter (4) zur Vermeidung der Leckagen der Kühlflüssigkeit, wobei das Schneidwerkzeug (30), das Spannfutter (5) und der Abdeckfutter (4) frei zusammenstellbare sowie frei wieder zerlegbare und somit auswechselbare Einzelteile sind, wobei für die Durchströmung der Kühlflüssigkeit mehrere in eine ringförmige Spalte (13) einmündenden, leckagenfrei gestalteten Hohlräume (9, 10, 11, 12) vorgesehen sind, **dadurch gekennzeichnet, dass** die im zylindrischen, radial schrumpfbaren Spannfutter (5) vorgesehenen Hohlräume (10) als mindestens drei durchlaufende geschlossene Nuten ausgebildet sind und die Länge derselben grösser ist als die Länge der sich zwischen dem Einspannabschnitt (3) des Scheidwerkzeugs (30) und dem die Hohlräume (10) enthaltenden zylindrischen, radial schrumpfbaren Spannfutter (5) erstreckenden Kontaktfläche (6).

2. Werkzeug mit zentralgekühltem Schneideteil zum Aufreiben von Löchern nach Anspruch 1, **dadurch gekennzeichnet, dass** das Schneidwerkzeug (30) mit der Schneide (1), dem Schaft (2) und dem Einspannzapfen (3) als ein Monoblock-Werkzeug aus Cermet ausgebildet ist.

3. Werkzeug mit zentralgekühltem Schneideteil zum Aufreiben von Löchern nach Anspruch 1, **dadurch gekennzeichnet, dass** das Schneidwerkzeug (30) mit der Schneide (1), dem Schaft (2) und dem Einspannzapfen (3) als ein Monoblock-Werkzeug aus gesintertem Hartmetall ausgebildet ist.

4. Werkzeug mit zentralgekühltem Schneideteil zum Aufreiben von Löchern nach Anspruch 1, **dadurch gekennzeichnet, dass** das Schneidwerkzeug (30) mit der Schneide (1), dem Schaft (2) und dem Einspannzapfen (3) als ein Monoblock-Werkzeug aus zwei unterschiedlichen Werkstoffen ausgebildet ist.

5. Werkzeug mit zentralgekühltem Schneideteil zum Aufreiben von Löchern nach einem der Ansprüche 1 bis 5, **dadurch gekennzeichnet, dass** die Schneide (1) des Schneidwerkzeugs (30) mit einem abreibfesten Überzug versehen ist.

6. Werkzeug mit zentralgekühltem Schneideteil zum Aufreiben von Löchern nach Anspruch 1, **dadurch gekennzeichnet, dass** das zylindrische, radial schrumpfbare Spannfutter (5) aus Edelstahl hergestellt ist.

## Claims

1. Tool with centrally cooled cutting section for reaming holes consisiting of a cutting tool (30) which is formed by a cutting part (1), of a shank (2) and of a fastening shank (3) is further provided with a radially shrinkable cylindrical sleeve (5) and with a cover sleeve (4) for preventing leakage of the coolant, wherein the cutting tool (30) and cover sleeve (4) are freely foldable and backward freely detachable and hence replaceable parts, whereby for the passing of coolant leak-tight formed cavities (9, 10, 11, 12) flowing into the round slot (13) are made, **characterized in, that** in the radially shrinkable cylindrical sleeve (5) carried out cavities (10) are created as at least three pass-through closed grooves and their length is greater than the length of the contact portion (6) extending between the fastening shank (3) of the cutting tool (30) and the cavity (10) comprising the radially shrinkable cylindrical sleeve (5).

2. Tool according to the claim 1, **characterized in, that** the cutting tool (30) with the cutting part (1), the shank (2) and the fastening shank (3) is created as a monoblock of cermet.

3. Tool according to the claim 1, **characterized in, that** the cutting tool (30) with the cutting part (1), the shank (2) and the fastening shank (3) is created as a monoblock of sintered carbide.

4. Tool according to the claim 1, **characterized in that** the cutting tool (30) with the cutting part (1), the shank (2) and the fastening shank (3) is created from two different materials as a monoblock.

5. Tool according to the claim 1 to 4, **characterized in, that** the cutting part (1) of the cutting tool (30) is provided with an abrasion resistant coating.

6. Tool according to the claim 1, **characterized in, that** the radially shrinkable cylindrical sleeve (5) is created of a tempered steel.

## Revendications

1. Outil doté d'une partie tranchante à refroidissement centralisté pour l'alésage de trous (30) avec partie a couper au arrossage centrale en fluide de refroidissement, comportant un corps d'outil a couper (30), celui-ci est fait par une partie coupante (element de coupe) (1), corps d'outil (2),et pédoncule de fixation (3), il y a encore une capsule radialement retrécissable cylindrique (5) et étui a couvrir (4) pour empecher les fuites de liquide de refroidissement. Outil a couper (30) et étui (4) sont librement a monter et démonter et alors , en méme temps ,changeables, liquide a refroidissement est conduit vers des cavités sans fuites (9,10,11,12) jusqu'a une crevasse circulaire (13), **caractérisé en ce que** les cavitées (10),constitués dans une capsule radialement retrécissable cylindrique (5) sont fait en forme d'au minimum trois rainures de passage fermées. Leurs longeur est supérieure de celui d'une partie de contact (6),qui se trouve entre partie de fixation (3) d'outil a couper (30) et une capsule radialement retrécissable cylindrique (5) aux cavitées (10).

2. Outil selon la revendication 1, **caractérisé en ce que** l'outil a couper (30), une partie coupante (1), corps d'outil (2) et pédoncule de fixation (3) sont en forme de monobloc de cermet.

3. Outil selon la revendication 1, **caractérisé en ce que** l'outil a couper (30), une partie coupante (1), corps d'outil (2) et pédoncule de fixation (3) sont en forme de monobloc de carbure (céramique coupante)

4. Outil selon la revendication 1, **caractérisé en ce que** l'outil a couper (30), une partie coupante (1), corps d'outil (2) et pédoncule de fixation (3) sont des deux matiéres différentes en forme de monobloc.

5. Outil selon la revendication 1- 4, **caractérisé en ce que** la partie coupante (1) d'outil a couper (30) est couvert par une couche anti-abrasif.

6. Outil selon la revendication 1, **caractérisé en ce que** une capsule radialement retrécissable cylindrique (5) est produit d'acier trempé ou ennobli.
